# EUROPEAN PATENT SPECIFICATION

(11) **EP 1 225 327 B1**
(45) Date of publication and mention of the grant of the patent: **10.12.2003**
(21) Application number: 01124480.3
(22) Date of filing: 12.10.2001
(51) Int. Cl.: F02K 9/80, F41G 7/34, F02K 9/92, F41G 7/20, F42B 15/00, F42B 15/01, F42B 10/66, F42B 10/38, F42B 10/22, G05D 1/08

(54) **Range control of a rocket-propelled projectile**
Regelung der Reichweite eines raketenangetriebenen Projektils
Reglage du rayon d'action pour un projectil propulsé par un moteur-fusée

(30) Priority: 03.11.2000 SE 0004022
(43) Date of publication of application: 24.07.2002
(73) Proprietor: SAAB AB, 581 88 Linköping (SE)
(72) Inventor: Komstadius, Sven, 587 29 Linköping (SE)
(74) Representative: Willquist, Bo

(56) References cited:
- US-A- 3 176 518
- US-A- 3 737 122
- US-A- 3 890 901
- US-A- 4 013 012
- US-A- 4 428 293
- US-A- 5 779 576

## Description

The invention relates to a method for controlling the range of a rocket-propelled projectile according to the pre-characterising clause of Claim 1.

The invention also relates to an arrangement for performing the above-mentioned method according to the pre-characterising clause of Claim 4.

The range of a rocket-propelled projectile is conventionally controlled by adjusting the elevation of a barrel by means of which the projectile is fired, or by deploying a drogue parachute carried by the projectile.

When controlling the range by adjusting the elevation, the elevation must be kept high, in the order of 60° to 90°, for short ranges, which results in a high trajectory and long flight time. This increases the risk of strong wind drift and at elevations approaching 90° there is a risk of hitting one's own firing platform.

The greatest disadvantage to a drogue parachute is that it can only be deployed once the rocket motor has burn out; otherwise there is a risk of destroying the parachute. Consequently the inner firing limit cannot be arbitrarily short. The parachute also gives rise to strong wind drift on the part of the projectile.

In the case of a projectile of the aforementioned type, there is therefore a need to control the range of the projectile with great accuracy within a specific range interval.

In addition to the need to be able to control the range within the specific interval, there is a need, in order to achieve the requisite accuracy, to compensate for variations in the momentum of the rocket motor, which can occur due to deviations in the motor temperature when firing and as a result of tolerance in the manufacture of the motor.

As examples of the prior art, reference will be made to the following published patents.
D1: US-A-4,991,393
D2: US-A-4,410,948
D3: US-A-3,311,130
D4: US-A-3,251,184
D5: US-A-3,737,122

D1 discloses an arrangement and a method for controlling the altitude of a spacecraft by using its propulsion motors without these being Cardan mounted. Two motors are throttled by a method specified in the publication as a function of an error signal corresponding to the difference between the actual angle of altitude and a set-point value for this.

D2 relates to throttle control for an aircraft having a plurality of engines, each engine being controlled by means of a throttle valve. The speed of the aircraft and the thrust of each engine are registered for calculating control signals for the adjustment of each engine's throttle valve, in order to balance the thrust of the engines.

D3, which relates to a control system for a rocket having a plurality of fixed motors, discloses how control valves for the rocket motors are operated at fixed levels above and below normal thrust level in order to produce a resulting corrective moment about a certain thrust axis.

D4 relates to a rocket motor with thrust that can be varied by controlling the fuel supply to the motor within a wide control range.

D5 discloses a control system with a reaction control motor used to influence the course of a projectile in a direction perpendicular to the center line of the vehicle.

The object of the present invention is to provide a method and an arrangement of the type referred to in the introductory part, by means of which a predetermined range is obtained.

In the method according to the invention this is achieved by the series of measures set out in the characterising part of Claim 1. In the case of the arrangement according to the invention, the object is achieved by the means specified in the characterising part of Claim 4.

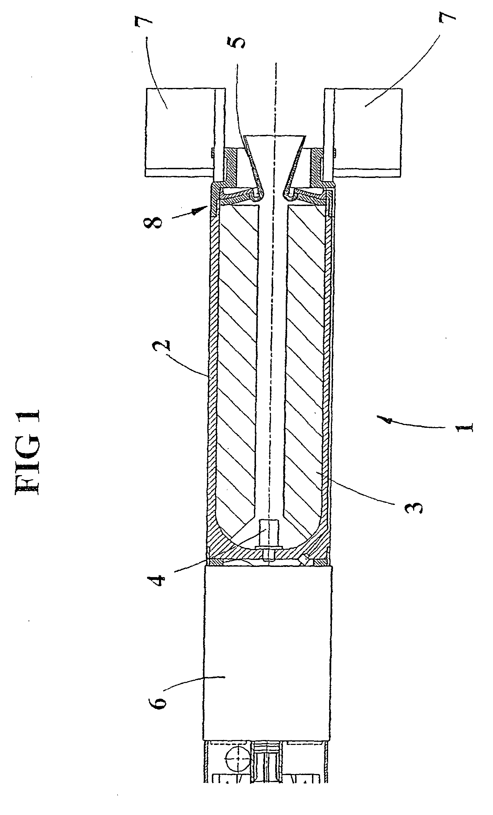

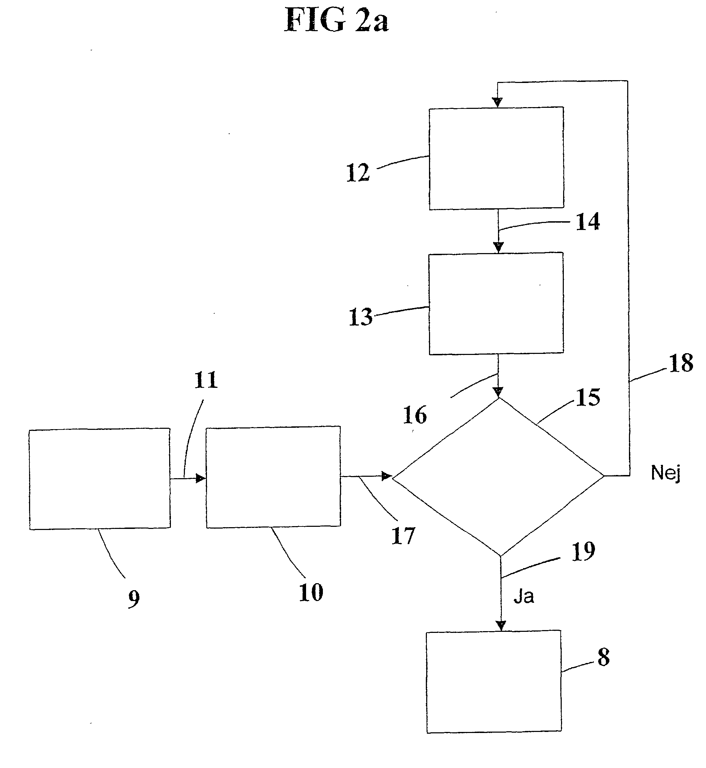

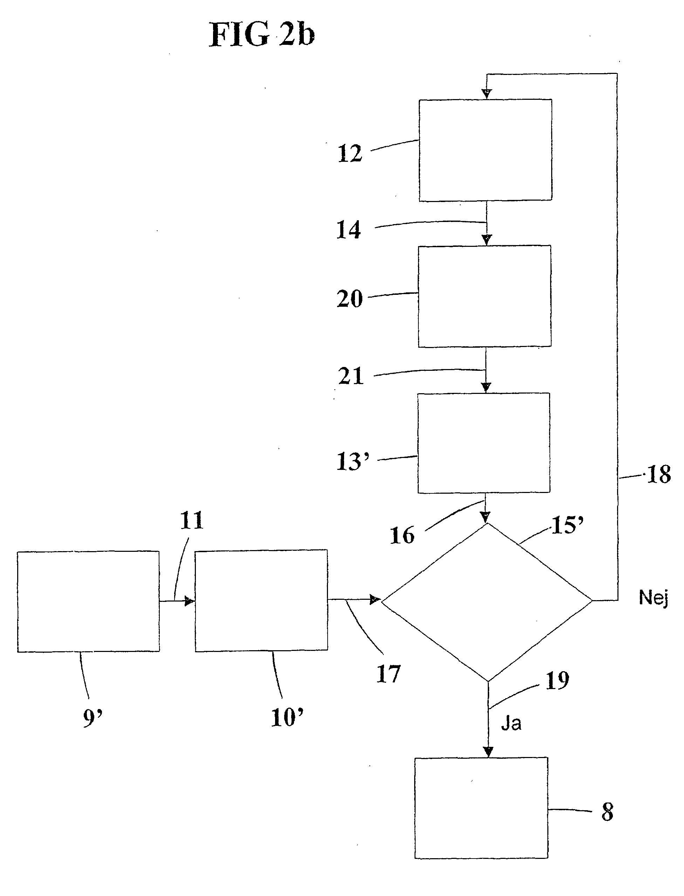

The invention will be explained in more detail below with reference to drawings attached, of which Fig. 1 in diagrammatic form shows a longitudinal section through the rear part of a rocket-propelled projectile. Fig. 2a illustrates in the form of a flow chart an example of the structure and function of the invention. Fig. 2b shows an alternative structure and function according to the invention.

In Fig. 1, 1 generally denotes a rocket motor comprising a motor casing 2, which in practice is a pressure vessel, a power propellant charge 3 placed in the motor casing 2, an igniter 4 and a nozzle adjoining the rear part of the motor casing 2. A space denoted by 6 contains control electronics, which control the guide fins 7 of the projectile, and the arrangement according to the invention, which will be explained in more detail below in connection with the Figures 2a, 2b. 8 generally denotes a separation mechanism for the nozzle 5. This preferably comprises an explosive charge, which is designed to separate the nozzle 5 from the rocket motor without otherwise affecting the projectile. The rocket motor 1 is initiated by means of the igniter 4, which by generating pressure and heat starts the combustion of the propellant powder. When the latter is burnt, a mass flow of powder gases is generated though the nozzle 5. This flow gives rise to a thrust,, which is opposed to the gas flow through the nozzle 5. The latter is designed for the specific gas flow, to which the propellant powder 3 gives rise. Given a correctly designed relationship between the nozzle 5 and the propellant powder 3, an excess pressure is maintained in the motor casing 2, which is necessary in order to keep the rate of combustion of the powder at a predetermined level.

If the pressure in the motor housing is reduced rapidly, by removing the nozzle 5, for example, so that a larger outlet area is created for the powder gases, the rate of combustion is reduced, with the result that the pressure falls further, so that ultimately combustion ceases or becomes very slow with a greatly reduced thrust as a result.

A correlation between the range of the projectile and the thrust of the rocket motor may be expressed, on the one hand, by using measurement of the acceleration to calculate a thrust, which after integration over time gives a momentum value, which corresponds to the range, and on the other by using measurement of the acceleration and integration over time to obtain a velocity corresponding to the range. The differences between these two methods of calculation reside primarily in the computing capacity that is required in the projectile.

The above-mentioned methods of determining the range of the projectile will now be explained more fully with reference to the Figures 2a, 2b.

In Fig. 2a, 9 denotes a ground-based calculation element designed, by means of the aforementioned correlation, to calculate a velocity value, which corresponds to a selected range. This velocity value therefore represents a set-point value. Since this calculation must take account of the fact that the mass of the projectile is modified through combustion of the powder charge, this calculation is relatively capacity-intensive and it is therefore advantageous to perform this on the ground.

Preferably just before the projectile is fired, the velocity set-point value is transmitted to a memory 10 on board the projectile, as illustrated by an arrow 11. On board the projectile there is also an accelerometer 12, the output signal of which is transmitted to an integrator 13, as is shown by an arrow 14. The output signal from the integrator 12 is a measure of the current velocity of the projectile and therefore constitutes a velocity value, which is fed to a comparator 15, which is illustrated by an arrow 16. The velocity set-point value from the memory 10 is also fed to the comparator 15, as illustrated by an arrow 17.

The comparator 15 is designed to continuously compare the velocity value with the velocity set-point value and, provided that the actual value is smaller than the set-point value, to cause the accelerometer 12 to continue the measurement, indicated in the figure by an arrow 14. The instant that the actual value becomes at least equal to the set-point value, the comparator 15 emits a signal, illustrated by an arrow 19, which triggers the separation mechanism 8, so that the nozzle 5 is detached immediately. At this, the thrust ceases, as stated, and the former acceleration of the projectile turns to retardation, the predetermined range has been reached.

In Fig. 2b the same reference numbers as in Fig 2a have, where appropriate, been retained. A ground-based calculation element 9' is designed to calculate a momentum value, which corresponds to a predetermined range, use being made of the correlations briefly referred to above and well-known to the person skilled in the art.

As previously, this momentum value represents a set-point value, which is transmitted to a memory 10' on board the projectile just before the projectile is fired. After firing, the acceleration of the projectile is continuously measured by the accelerometer 12 and its output signal, as illustrated by the arrow 14, is fed to a calculation element 20, designed to calculate the instantaneous thrust of the rocket motor from the said acceleration signal. A signal corresponding to the said thrust is fed, as indicated by an arrow 21, to the integrator 13', a value being obtained, according to the laws of mechanics, for the momentum developed by the rocket motor. This value is a momentum value, which is fed to the comparator 15', where it is constantly compared with the momentum value from the memory 10' in order to produce an action on the separation mechanism 8 in the same way as described in connection with Fig. 2a, when the actual value has been found to be at least equal to the set-point value and the predetermined range has consequently been reached.

## Claims

1. Method for controlling the range of a projectile propelled by a rocket motor, wherein an actual value of a quantity clearly correlating with the distance covered by the projectile is continuously determined during the propulsion, the actual value thus determined is continuously compared with a predefined set-point value, **characterised in that** the set-point value corresponds to a predetermined range, for the projectile and **in that** the propulsion capability of the rocket motor is instantaneously terminated, when the actual value has been found to be at least equal to the set-point value.

2. Method according to Claim 1, **characterised in that** a momentum value is used as the quantity clearly correlating with the distance covered by the projectile.

3. Method according to Claim 1, **characterised in that** a velocity value is used as the quantity clearly correlating with the distance covered by the projectile.

4. Method according to any of the preceding Claims, **characterised in that** the nozzle of the rocket motor is detached in order to terminate the propulsion capability of the rocket motor instantaneously.

5. Arrangement for controlling the range of a projectile propelled by a rocket motor, wherein the arrangement comprises a calculation element (9;9') arranged outside the projectile and preferably stationary, which is designed on the basis of a predetermined range and using known mechanical correlations to calculate a set-point quantity corresponding to the predetermined range, on board the projectile: a memory element (10; 10') designed to store the set-point value transmitted from the calculation element (9;9'), an element (12) measuring the acceleration of the projectile after firing, a second calculation element (13; 20; 13') connected to the acceleration measuring element (12) and designed to continuously calculate an actual range value from the acceleration, a comparing element (15; 15') designed to continuously compare the range set-point quantity with the actual range value, **characterised in that** the comparator is arranged to initiate termination of the propulsion capability of the rocket motor instantaneously when the actual value is at least equal to the set-point value.

6. Arrangement according to Claim 5, **characterised in that** the said calculation element (9) is designed to calculate a projectile velocity value as set-point quantity for the predetermined range, and that the said second calculation element (13) is an integrator designed during the time from firing of the projectile to continuously integrate the output signal from the acceleration measuring element, thereby producing an actual value for the velocity of the projectile.

7. Arrangement according to Claim 5, **characterised in that** the said calculation element (9') is designed to calculate a momentum set-point value as set-point quantity for the predetermined range of the projectile, and that the said second calculation element (20, 13') comprises elements (20) designed during the time from firing of the projectile to continuously calculate the thrust of the rocket motor from the output signal of the acceleration measuring element and an integration element (13') connected to the calculation element (20) and designed to generate a momentum value from the running thrust value.

## Patentansprüche

1. Verfahren zum Steuern der Reichweite eines von einem Raketenmotor angetriebenen Projektils, bei dem ein Istwert einer Größe, die deutlich mit der von dem Projektil abgedeckten Distanz korreliert, fortwährend während des Antriebs bestimmt wird, wobei der somit bestimmte Istwert fortwährend mit einem vordefinierten Sollwert verglichen wird, **dadurch gekennzeichnet, dass** der Sollwert einer vorbestimmten Reichweite für das Projektil entspricht, und dadurch, dass die Antriebsfähigkeit des Raketenmotors augenblicklich beendet wird, wenn herausgefunden wurde, dass der Istwert mindestens gleich dem Sollwert ist.

2. Verfahren gemäß Anspruch 1, **dadurch gekennzeichnet, dass** ein Impulswert als die Größe verwendet wird, die deutlich mit der von dem Projektil abgedeckten Distanz korreliert ist.

3. Verfahren gemäß Anspruch 1, **dadurch gekennzeichnet, dass** ein Geschwindigkeitswert als die Größe verwendet wird, die deutlich mit der von dem Projektil abgedeckten Distanz korreliert ist.

4. Verfahren gemäß einem der vorhergehenden Ansprüche, **dadurch gekennzeichnet, dass** die Düse des Raketenmotors abgetrennt wird, um die Antriebsfähigkeit des Raketenmotors augenblicklich zu beenden.

5. Anordnung zum Steuern der Reichweite eines von einem Raketenmotor angetriebenen Projektils, wobei die Anordnung ein außerhalb des Projektils angeordnetes und vorzugsweise stationäres Berechnungselement (9; 9'), das auf der Grundlage einer vorbestimmten Reichweite und unter Verwendung bekannter mechanischer Korrelationen ausgestaltet ist, um eine Sollwertgröße entsprechend der vorbestimmten Reichweite zu berechnen, und an Bord des Projektils umfasst: ein Speicherelement (10; 10'), das ausgestaltet ist, um den von dem Berechnungselement (9; 9') übertragenden Sollwert zu speichern, ein Element (12), das die Beschleunigung des Projektils nach dem Abschießen misst, ein zweites Berechnungselement (13; 20; 13'), das mit dem Beschleunigungsmesselement (12) verbunden und ausgestaltet ist, um einen tatsächlichen Reichweitewert aus der Beschleunigung fortwährend zu berechnen, ein Vergleichselement (15; 15'), das ausgestaltet ist, um die Reichweitesollgröße fortwährend mit dem Istwert der Reichweite zu vergleichen, **dadurch gekennzeichnet, dass** der Komparator angeordnet ist, um die Beendigung der Antriebsfähigkeit des Raketenmotors augenblicklich zu initüeren, wenn der Istwert mindestens gleich dem Sollwert ist.

6. Anordnung gemäß Anspruch 5, **dadurch gekennzeichnet, dass** das Berechnungselement (9) ausgestaltet ist, um einen Projektilgeschwindigkeitswert als Sollgröße für die vorbestimmte Reichweite zu berechnen, und dass das zweite Berechnungselement (13) ein Integrator ist, der ausgestaltet ist, während der Zeit von dem Abschießen des Projektils das Ausgangssignal von dem Beschleunigungsmesselement fortwährend zu integrieren, wodurch ein Istwert für die Geschwindigkeit des Projektils erzeugt wird.

7. Anordnung gemäß Anspruch 5, **dadurch gekennzeichnet, dass** das Berechnungselement (9') ausgestaltet ist, um einen Impulssollwert als Sollgröße für die vorbestimmte Reichweite des Projektils zu berechnen, und dass das zweite Berechnungselement (20, 13') Elemente (20), die ausgestaltet sind, während der Zeit von dem Abschießen des Projektils fortwährend den Schub des Raketenmotors aus dem Ausgangssignal des Beschleunigungsmesselements zu berechnen, und ein mit dem Berechnungselement (20) verbundenes Integrationselement (13') umfasst und ausgestaltet ist, um einen Impulswert aus dem laufenden Schubwert zu erzeugen.

## Revendications

1. Procédé de réglage de la portée d'un projectile propulsé par un moteur de fusée, dans lequel une valeur effective d'une quantité clairement en corrélation avec la distance couverte par le projectile est continuellement déterminée pendant la propulsion, et la valeur effective ainsi déterminée est continuellement comparée à une valeur de consigne prédéfinie, **caractérisé en ce que** la valeur de consigne correspond à une portée prédéterminée pour le projectile, et **en ce que** la capacité de propulsion du moteur de fusée est instantanément supprimée lorsque la valeur effective a été trouvée comme étant au moins égale à la valeur de consigne.

2. Procédé selon la revendication 1, **caractérisé en ce qu'**on utilise une valeur de quantité de mouvement comme quantité clairement en corrélation avec la distance couverte par le projectile.

3. Procédé selon la revendication 1, **caractérisé en ce qu'**on utilise une valeur de vitesse comme quantité clairement en corrélation avec la distance couverte par le projectile.

4. Procédé selon une quelconque des revendications précédentes, **caractérisé en ce que** la tuyère du moteur de fusée est détachée afin de supprimer instantanément la capacité de propulsion du moteur de fusée.

5. Dispositif de contrôle de la portée d'un projectile propulsé par un moteur de fusée, dans lequel le dispositif comprend un élément de calcul (9, 9') placé à l'extérieur du projectile et de préférence stationnaire, qui est prévu sur la base d'une portée prédéterminée et qui utilise des corrélations mécaniques connues pour calculer une quantité de consigne correspondant à la portée prédéterminée, et à bord du projectile : un élément de mémoire (10 ; 10') prévu pour stocker la valeur de consigne transmise à partir de l'élément de calcul (9 ; 9'), un élément (12) mesurant l'accélération du projectile après le tir, un deuxième élément de calcul (13 ; 20 ; 13') connecté à l'élément de mesure d'accélération (12) et prévu pour calculer continuellement une valeur de portée effective à partir de l'accélération, un élément de comparaison (15 ; 15') prévu pour comparer continuellement la quantité de consigne de portée à la valeur de portée effective, **caractérisé en ce que** le comparateur est prévu pour déclencher la suppression de la capacité de propulsion du moteur de fusée instantanément lorsque la valeur effective est au moins égale à la valeur de consigne.

6. Dispositif selon la revendication 5, **caractérisé en ce que** ledit élément de calcul (9) est prévu pour calculer une valeur de vitesse de projectile comme quantité de consigne pour la portée prédéterminée, et **en ce que** ledit deuxième élément de calcul (13) est un intégrateur prévu pour intégrer continuellement, pendant la période à partir du tir du projectile, le signal de sortie de l'élément de mesure d'accélération, afin de produire une valeur effective de la vitesse du projectile.

7. Dispositif selon la revendication 5, **caractérisé en ce que** ledit élément de calcul (9') est conçu pour calculer une valeur de consigne de quantité de mouvement comme quantité de consigne pour la portée prédéterminée du projectile, et **en ce que** ledit deuxième élément de calcul (20, 13') comprend des éléments (20) prévus pour calculer de façon continue, pendant la période à partir du tir du projectile, la poussée du moteur de fusée sur la base du signal de sortie de l'élément de mesure d'accélération, et un élément d'intégration (13') connecté à l'élément de calcul (20) et prévu pour engendrer une valeur de quantité de mouvement à partir de la valeur de poussée courante.
